# EUROPÄISCHE PATENTSCHRIFT

(11) **EP 2 879 282 B1**
(45) Veröffentlichungstag und Bekanntmachung des Hinweises auf die Patenterteilung: **26.06.2019**
(21) Anmeldenummer: 14195865.2
(22) Anmeldetag: 02.12.2014
(51) Int. Cl.: H02K 33/16

(54) **Inertialkraftgenerator mit integriertem Haltemechanismus**
Intertial force generator with integrated holding mechanism
Générateur de force d'inertie doté d'un mécanisme de fixation intégré

(30) Priorität: 02.12.2013 DE 102013113347
(43) Veröffentlichungstag der Anmeldung: 03.06.2015
(73) Patentinhaber: Airbus Defence and Space GmbH, 85521 Ottobrunn (DE)
(72) Erfinder: Storm, Stefan, 85716 Unterschleißheim (DE); Dr. Maier, Rudolf, 83714 Miesbach (DE)
(74) Vertreter: Isarpatent

(56) Entgegenhaltungen:
- EP-A2- 1 430 588
- US-A- 6 002 184
- US-A1- 2003 173 725
- US-A1- 2011 316 206
- US-A1- 2013 119 787

## Beschreibung

Die Erfindung betrifft einen Inertialkraftgenerator für ein aktives Resonanzsystem, ein damit versehenes Resonanzsystem, ein Verfahren zum Ver- und Entriegeln des Resonanzsystems und eine Verwendung des Resonanzsystems gemäß dem Oberbegriff von Anspruch 1.

Aktive Resonanzsysteme bestehend aus einem Kraftgenerator, einer Feder und Inertialmasse (z. B. Inertialkraftgeneratoren) und werden für einen bestimmten Kraft- und Frequenzbereich ausgelegt. Treten kurzzeitig höhere Beschleunigungen auf (z. B. beim Start oder Absprengen einer Trägerrakete, Hochfahren eines Triebwerks), kann dies zur Beschädigung des aktiven Systems führen.

Aus der JP 2012-007 725 A ist ein Kraftgenerator gemäß dem Oberbegriff von Anspruch 1 bekannt. Dabei ist die Position des Schwingers im nicht-angeregten Zustand unbestimmt, abhängig von der Lage des Kraftgenerators und der Elastizität der elastischen Halterungen. Wenn aus einem schwingenden Zustand der Anregungsstrom abgeschaltet wird, schwingt der Schwinger noch aus und könnte dann weiterschwingen, z.B. bei kurzzeitigen höheren Beschleunigungen beschädigt werden.

Überdies kennt man in diesem Zusammenhang die EP 1430 588 A2, die einen Tauchspulenmotor offenbart, bei welchem die Schwingerbewegung durch einen Anschlag begrenzt wird. Im übrigen kennt man aus der US 2003/173725 A1 einen Vibrationsdämpfer, der einen elektrodynamischen Motor zur Änderung der Dämpfung einsetzt und aus der US 2013/119787 A1 eine lineare Schwingungseinrichtung zur Schwingungserzeugung in elektronischen Geräten.

Hiervon ausgehend liegt der Erfindung die Aufgabe zugrunde, einen solchen Kraftgenerator bzw. ein damit versehenes Resonanzsystem gegenüber äußeren Beschleunigungs-Einwirkungen, insbesondere plötzlichen Beschleunigungen, unempfindlich zu gestalten.

Erfindungsgemäß wird diese Aufgabe durch die in den Ansprüchen angegebenen Merkmale gelöst. Insbesondere wird die Aufgabe gelöst durch einen Kraftgenerator für ein aktives Resonanzsystem, umfassend ein Gehäuse, an dem eine Tauchspule befestigt ist, ferner umfassend einen Schwinger mit mindestens einem Permanentmagneten, der einen Ringschlitz für die Tauchspule aufweist, wobei der Schwinger mittels elastischer Halterungen mit einem Bewegungsfreiheitsgrad im Gehäuse so aufgehängt ist, dass eine schwingende Bewegung in Axialrichtung des Ringschützes erfolgt, wobei ferner im Gehäuse ein Anker angeordnet ist, der bei Annäherung des Schwingers diesen magnetisch anzieht, so dass der Schwinger dadurch gegen die Kraft der elastischen Halterungen gegen den Anker in eine verriegelte Steilung bewegbar ist.

Bei der Erfindung handelt es sich um ein elektromechanisches System, das unter Ausnutzung des Lorentz- und Reluktanzprinzips mit nur einer aktiven Erregung (Spule) sowohl dynamisch Inertialkräfte erzeugen kann als auch hohe Haltekräfte an einer Endposition generiert.

Bei der Erfindung ist die gewichtsmäßig leichte Tauchspule mit dem Gehäuse verbunden und somit deren Zuleitung keiner Relativbewegung ausgesetzt, gleichzeitig wird eine gute Kühlung sichergestellt. Die Masse des schwingungsfähigen magnetischen Systems wird zur Kraftgenerierung verwendet, dadurch kann auf zusätzliche Massen verzichtet werden und es ist ein geringes Systemgewicht erreichbar. Die Funktion der Tauchspule ist, mit dem magnetischen System dynamische Inertialkräfte zu generieren, die Verriegelungsposition anzufahren und wieder zu lösen. Bei geeigneter Wahl des Permanentmagneten und der Feder ist ein stromloses Verweilen in der Verriegelungsposition möglich; dies spart Energie und erhöht die Betriebssicherheit. Dabei wird die Rückstellkraft der Feder kleiner oder gleich der Haltekraft des Permanentmagneten gewählt. Die Haltekraft kann durch Aktuierung der Tauchspule weiter verstärkt werden. Der Test des Verriegelungs-systems ist jederzeit und wiederholbar durchführbar.

Außerdem umfasst der Schwinger einen Topf, an dem zentrisch der Permanentmagnet angebracht ist. Diese Ausbildung ist baulich einfach und kompakt. Durch Wahl der Wandstärke wird die gewünschte magnetische Leitfähigkeit erreicht, wobei grundsätzlich eine geringe schwingende Masse des Schwingers erstrebenswert ist. Diese wird so gewählt, dass ein System mit optimalem Leistungsgewicht (d.h. einem maximalen Kraft/Gewicht-Verhältnis) erzielt wird. Erfüllt die Systemauslegung die Anforderung der erforderlichen Aktuatorkraft bei max. Leistungsgewicht, kann meist ohne größeren Aufwand über die Anpassung der Schwingungsamplitude die zu generierende Inertialkraft eingestellt werden. Die gewünschte Resonanzfrequenz wird schließlich durch die Wahl der Federsteifigkeit erreicht.

Gemäß einer vorteilhaften Weiterbildung sind innenseitig am Topf und am Permanentmagneten magnetisierbare Ringabschnitte zur Ausbildung des Ringschlitzes angebracht. Hierdurch lässt sich baulich einfach der Ringschlitz für die Tauchspule ausbilden.

Gemäß einer anderen vorteilhaften Weiterbildung ist der Schwinger an zwei axial beabstandeten Stellen mittels gleichartiger elastischer Halterungen am Gehäuse angebracht. Gemäß einer anderen vorteilhaften Weiterbildung sind die elastischen Halterungen als Federn ausgebildet. Vorzugsweise sind dabei zwischen Gehäuse und Schwinger zwei axial beabstandete Gruppen von je mindestens drei am Axialumfang verteilten Federn angeordnet. Alternativ können auch Ringscheiben (z.B. Tellerfeder), vorzugsweise aus Berylliumkupfer, über den gesamten Axialumfang verwendet werden. Diese Ausbildungen ermöglichen eine baulich einfache Fixierung des Schwingers, die nur einen translatorischen Freiheitsgrad zulässt.

Aufgrund der Federn erhält man ein resonantes System. Der Vorteil davon ist: in der Nähe der Resonanzfrequenz kann elektrische Energie gespart werden, da bei geringer elektrischer Ansteuerung (geringe Aktuatorkraft) hohe Inertialkräfte generiert werden.

Die Erfindung betrifft ein Resonanzsystem umfassend einen vorbeschriebenen Kraftgenerator sowie eine Kontrolleinrichtung für den elektrischen Anschluss der Tauchspule.

Die Erfindung betrifft ferner ein Verfahren zum Verriegeln des Resonanzsystems, wobei durch Ansteuerung der Tauchspule eine auf den Schwinger wirkende Anziehungskraft erzeugt wird, wodurch dieser an den Anker herangezogen wird, bis eine zwischen Schwinger und Anker wirkenden elektromagnetische Anziehungskraft diese in Kontakt zieht und hält. Es handelt sich um einen fließenden Übergang zwischen den beiden Prinzipien. Damit ist auf sehr einfache Weise eine Verriegelung möglich, die ohne elektrische Energie und ohne weitere elektromechanische Systeme allein durch Permanentmagnetismus im verriegelten Zustand bleibt.

Die Erfindung betrifft ferner ein Verfahren zum Entriegeln des verriegelten Resonanzsystems, wobei durch Ansteuerung der Tauchspule die Haltekraft aufgehoben wird. Bei Erzeugung eines kurzzeitigen Gegenfeldes durch die Spule wird die Haltekraft soweit abgebaut, dass die rücktreibende Federkraft den Schwinger wieder in den Betriebszustand der dynamischen Kraftgenerierung bringt. Hierdurch wird auf einfachste Weise eine Entriegelung bewirkt.

Für den Betrieb des Resonanzsystems ist es notwendig, die Position des Schwingers zu kennen. Dies erfolgt vorzugsweise durch einen Sensor, der den Abstand zwischen Schwinger und Anker misst und/oder mit Hilfe der ohnehin im Verstärker (z.B. Klasse-D) vorhandenen Messwerte von Spannung und Strom. Da bei Verzicht auf einen zusätzlichen Sensor eine höhere Betriebssicherheit erreicht wird, ist diese Ausführung bevorzugt.

Um für eine Ausführung ohne Abstandssensor aus dem Strom- und Spannungssignalen den Abstandswert zu generieren, sind vorzugsweise folgende Verfahren geeignet:
Gemäß einem ersten Verfahren ist in einem Microcontroller das physikalische Modell des Resonanzsystems hinterlegt und in kurzen Zeitabschnitten werden die Messwerte mit dem Modell verglichen, um mittels eines Optimierverfahrens (nichtlinearer Modellansatz) oder eines inversen Modells (linearer Modellansatz) die aktuelle Position des Schwingers zu ermitteln.

Gemäß einem zweiten Verfahren kann auf einen Microcontroller verzichtet werden und eine Steuerung auf Basis eines FPGA (Field Programmable Gate Array) erfolgen, was eine Zulassung für die Luft- und Raumfahrt deutlich vereinfacht, Hierbei erfolgt vorab eine Systemidentifizierung, indem für verschiedene Ansteuerfrequenzen (evtl. auch versch. Ansteueramplituden) die Spannungs- und Stromwerte gemessen und ihre zeitliche Ableitung und Integral {hochpassgefiltert) bestimmt werden. Diese Werte werden anschließend im Betrieb mit einer Lookup-Table verglichen und die entsprechende Position interpoliert. Die Erstellung der Lookup- Table erfolgt vorzugsweise durch Messung der Spannung- und Stromwerte inklusive des Abstandes mittels eines zusätzlichen Wegmesssystems in einem Prüfstand, um das individuelle Verhalten eines jeden Resonanzsystems genau zu beschreiben. Alternativ zur Messung kann die Erstellung der Lookup-Table auch auf der Basis eines physikalischen Modells erfolgen, wobei die Position des Schwingers in Abhängigkeit von Spannungs- und Stromwert und ihre zeitliche Ableitung und Integral (hochpassgefiltert) für verschiedene Ansteuerfrequenzen (evtl. auch versch. Ansteueramplituden) berechnet wird.

Das Ausgangssignal der Reglereinheit (u.a. auch Steuereinheit) erfolgt vorzugsweise in einem Format, dass geeignet ist, direkt die Verstärkereinheit zu steuern. In vielen Fällen ist das Verfahren der Pulsweitenmodulation (PWM) geeignet. Damit kann auf eine in der Verstärkereinheit vorgesehene eigene Reglereinheit verzichtet werden und somit kann die Regiereinheit mit der Ansteuerelektronik des Verstärkers verschmolzen werden.

Die Erfindung betrifft ferner die Verwendung des Resonanzsystems in einem Luftfahrzeug. Dies ist besonders vorteilhaft, weil zum einen ein möglichst geringes Gewicht von Vorteil ist und zum anderen die Zuverlässigkeit eine große Rolle spielt und dafür möglichst wenige bewegte Bauteile von Vorteil sind.

Die Erfindung wird nachfolgend anhand der beigefügten Zeichnungen weiter erläutert. Dabei zeigt
- Figur 1:: einen schematischen Axialschnitt durch einen Kraftgenerator im entriegelten Zustand,
- Figur 2:: einen schematischen Axialschnitt durch den gleichen Kraftgenerator im verriegelten Zustand.

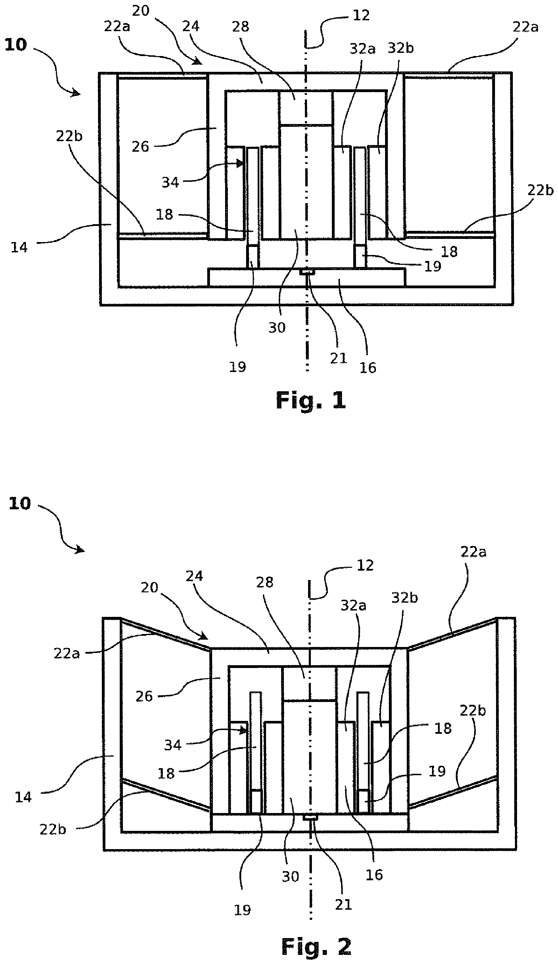

In den Figuren 1 und 2 ist ein Kraftgenerator 10 in zwei Positionen dargestellt, nämlich in Figur 1 in einem nicht verriegelten Zustand und in Figur 2 in einem verriegelten Zustand. Gleiche Bezugszeichen bezeichnen in beiden Figuren gleiche Teile.

Der Kraftgenerator 10 umfasst ein bezüglich einer Achse 12 rotationssymmetrisches Gehäuse 14, an dem innen zentrisch ein Anker 16 angebracht ist. Am Anker 16 oder direkt am Gehäuse 14 ist ferner eine bezüglich der Achse 12 rotationssymmetrische Tauchspule 18 über einen Abstandring 19 angebracht, die über nicht dargestellte Leitungen mit Strom versorgt wird. Dieser Abstandsring 19 besteht aus einem nicht-ferromagnetischen, aber gut wärmeleitenden Material, vorzugsweise CuBe2, und dient dazu, einen magnetischen Kurzschluss über den Anker 16 zu vermeiden und zugleich die in der Tauchspule 18 erzeugte Wärme abzuleiten.

Am Gehäuse 14 ist ferner ein Schwinger 20 angebracht, und zwar über zwei bezüglich der Achse 12 versetzte elastische Halterungen 22a, 22b, derart, dass der Schwinger 20 in einem Freiheitsgrad, nämlich der Richtung der Achse 12, schwingen kann. Die elastischen Halterungen 22a, 22b sind vorzugsweise am Umfang verteilte Federn, jeweils mindestens drei, vorzugsweise vier. Die elastischen Halterungen 22a, 22b sind vorzugsweise wärmeleitend, um die im Schwinger 20 erzeugte Wärme zum Gehäuse 14 abzuleiten.

Der Schwinger 20 umfasst einen Topf 24 mit einer zylindrischen Wandung 26 und enthält zentrisch im Inneren einen Permanentmagneten 28, an dessen axial freiem Ende ein magnetisierbares Masseteil 30 angebracht ist. Alternativ kann der Magnet auch an anderen Stellen angeordnet sein, soweit der Magnetfluss einerseits durch die Tauchspule 18 und andererseits durch den Anker 16 gewährleistet ist.

Das Masseteil 30 kann auch direkt am Schwinger 20 befestigt sein. Sowohl an der Innenseite der Wandung 26 als auch außenseitig am Permanentmagneten 28 bzw. Masseteil 30 sind magnetisierbare Schlitzwandungen 32a, 32b angebracht, zwischen denen ein Ringschlitz 34 ausgebildet ist, der mit der Tauchspule 18 fluchtet.

Um den Kraftgenerator 10 in Betrieb zu versetzen, wird mittels einer nicht dargestellten Kontrolleinrichtung mit geeigneter Frequenz und Amplitude ein Strom durch die Tauchspule 18 geleitet, welche im Feld des Permanentmagneten 28 über die Lorenzkraft eine in Richtung der Achse 12 wirkende Kraft erzeugt und damit den Schwinger 20 entgegen der Haltekraft der elastischen Halterungen 22a, 22b in Bewegung und damit in Schwingungen versetzt. Am Kraftgenerator 10 kann ferner ein Sensor zur Ermittlung der Position des Schwinger 20 angebracht sein, damit mittels der Kontrolleinrichtung eine Regelung erfolgen kann.

Um den Schwinger 20 in die in Figur 2 dargestellte verriegelte Stellung zu bringen, wird über eine geeignete Strombeschickung der Tauchspule 18 eine auf den Schwinger 20 wirkende Kraft erzeugt, welche diesen dem Anker 16 annähert. Dieser Anker 16 bildet zusammen mit dem Permanentmagneten 28 des Schwingers 20 ein magnetisches System, bei dem die Magnetfeldlinien so abgeändert werden, dass sich das Gesamtsystem wie ein Permanentelektromagnet verhält. Bei Unterschreiten des Abstandes zwischen dem Anker 16 und dem Masseteil 30 ziehen sich beide Teile an, bis das Masseteil 30 am Anker 16 anschlägt und daran aufgrund der Magnetkraft selbst dann verbleibt, wenn der Strom in der Tauchspule 18 abgeschaltet wird. Mit anderen Worten ist der Kraftgenerator 10 also in einem verriegelten Zustand.

Um diesen Kraftgenerator 10 aus dem in Figur 2 gezeigten verriegelten in den in Figur 1 gezeigten entriegelten Zustand zu bringen, muss lediglich eine ausreichend große Kraft durch Strombeschickung der Tauchspule 18 erzeugt werden, so dass dann der Schwinger 20 vom Anker 16 abhebt und von den elastischen Halterungen 22a, 22b in die in Figur 1 gezeigte Stellung gezogen wird.

Eine geeignete Regelung kann auftretende Nichtlinearitäten ausgleichen, um höherharmonische Schwingungsanregung zu vermeiden. Hierfür ist entweder ein Abstandssensor nötig, oder es wird als Sensorsignal Strom und Spannung gemessen und über ein physikalisches Modell die Position des rotierenden Gehäuses 14 bestimmt. Ein Abstandssensor 35 ist vorzugsweise zwischen dem Anker 16 und dem Masseteil 30 angeordnet.

Eine bevorzugte Ausführungsform ist ein Resonanzsystem, das eine Schwingungsamplitude von 0.4 mm erzeugt. Bei einer schwingenden Masse von 250 Gramm wird eine wirkende Inertialkraft (Masse mal Beschleunigung) von 0.4 N bis 40 N für den Frequenzbereich von 10 Hz bis 100 Hz. Die benötigte innere Kraft, die der Aktuator aufbringen muss, um die Schwingungsamplitude zu erzeugen, muss mindestens 20 N betragen (unter Ausnutzung von Resonanzüberhöhungen, Resonanzfrequenz im Bereich 10 Hz bis 100 Hz) oder mindestens 40 N betragen (ohne Ausnutzung von Resonanzüberhöhungen, Resonanzfrequenz kleiner 10 Hz).

Der Abstand des rotationssymmetrischen Gehäuses 14 zum Anker 16 beträgt ca. 2 mm. Die Haltekraft an der Verriegelungsposition beträgt etwa 200 N im stromlosen Zustand und 300 N bei zusätzlicher elektrischer Unterstützung durch die Spule.

Eine geeignete Regelung kann auftretende Nichtlinearitäten ausgleichen, um höherharmonische Schwingungsanregung zu vermeiden. Hierfür ist entweder ein Abstandssensor 35 nötig, oder es wird als Sensorsignal Strom und Spannung gemessen und über ein physikalisches Modell die Position des rotierenden Gehäuses 14 bestimmt.

### Bezugszeichenliste

- 10: Kraftgenerator
- 12: Achse
- 14: Gehäuse
- 16: Anker
- 18: Tauchspule
- 19: Abstandsring
- 20: Schwinger
- 22a,b: elastische Halterung
- 24: Topf
- 26: Wandung
- 28: Permanentmagneten
- 30: Masseteil
- 32a,b: Schlitzwandungen
- 34: Ringschlitz
- 35: Abstandsensor

## Patentansprüche

1. Kraftgenerator (10) für ein aktives Resonanzsystem, umfassend ein Gehäuse (14), an dem eine Tauchspule (18) befestigt ist, ferner umfassend einen Schwinger (20) mit mindestens einem Permanentmagneten (28), der einen Ringschlitz (34) für die Tauchspule (18) aufweist, wobei der Schwinger (20) mit einem Bewegungsfreiheitsgrad im Gehäuse (14) so aufgehängt ist, dass eine schwingende Bewegung in Axialrichtung des Ringschlitzes (34) erfolgt, wobei das Gehäuse (14) bezüglich der Axialrichtung rotationssymetrisch ausgebildet ist, ferner im Gehäuse (14) ein Anker (16) angeordnet ist, der bei Annäherung des Schwingers (20) diesen magnetisch anzieht, , und wobei der Schwinger (20) einen Topf (24) umfasst, an dem zentrisch der Permanentmagnet (28) angebracht ist, **dadurch gekennzeichnet, dass** der Kraftgenerator (10) zur Erfassung des Abstands zwischen Schwinger (20) und Anker (16) eine Positionsbestimmungseinrichtung (35) umfasst und dass der Schwinger (20) mittels elastischer Halterungen (22a, 22b) aufgehängt ist, gegen deren Kraft er durch die Anziehung des Ankers (16) gegen diesen in eine verriegelte Stellung bewegbar ist

2. Kraftgenerator (10) nach Anspruch 1 oder 2, **dadurch gekennzeichnet, dass** innenseitig am Topf (24) und am Permanentmagneten (28) magnetisierbare Ringabschnitte zur Ausbildung des Ringschlitzes (34) angebracht sind.

3. Kraftgenerator (10) nach einem der vorherigen Ansprüche, **dadurch gekennzeichnet, dass** der Schwinger (20) an zwei axial beabstandeten Stellen mittels gleichartiger elastischer Halterungen (22a, 22b) am Gehäuse (14) angebracht ist.

4. Kraftgenerator (10) nach Anspruch 1, **dadurch gekennzeichnet, dass** die elastischen Halterungen (22a, 22b) als Federn, insbesondere als Ringscheiben aus wärmeleitendem Material mit hoher Dauerfestigkeit ausgebildet sind.

5. Kraftgenerator (10) nach Anspruch 4, **dadurch gekennzeichnet, dass** zwischen Gehäuse (14) und Schwinger (20) zwei axial beabstandete Gruppen von je mindestens drei am Axialumfang verteilten Federn angeordnet sind.

6. Kraftgenerator (10) nach einem der vorherigen Ansprüche, **dadurch gekennzeichnet, dass** die Tauchspule (18) über einen Abstandsring (19) aus einem nicht-ferromagnetischen und wärmeleitenden Material am Gehäuse (14) befestigt ist.

7. Kraftgenerator (10) nach Anspruch 6, **dadurch gekennzeichnet, dass** der Abstandsring (19) aus Berylliumkupfer besteht.

8. Kraftgenerator (10) nach einem der vorherigen Ansprüche, **dadurch gekennzeichnet, dass** die Positionsbestimmungseinrichtung durch einen Abstandssensor (35) gebildet ist.

9. Resonanzsystem umfassend einen Kraftgenerator (10) nach einem der vorherigen Ansprüche sowie eine Kontrolleinrichtung für den elektrischen Anschluss der Tauchspule (18).

10. Resonanzsystems nach Anspruch 9, bei welchem durch Ansteuerung der Tauchspule (18) eine auf den Schwinger (20) wirkende Anziehungskraft erzeugt wird, wodurch dieser an den Anker (16) herangezogen wird, bis eine zwischen Schwinger (20) und Anker (16) wirkenden elektromagnetische Anziehungskraft diese in Kontakt zieht und hält, wodurch das Resonanzsystem verriegelbar oder verriegelt ist.

11. Verfahren zur Positionsbestimmung eines Schwingers (20) eines Resonanzsystems nach einem der Ansprüche 9 oder 10 mittels Spannung- und Strommessung, **dadurch gekennzeichnet, dass** in einem Microcontroller das physikalische Modell des Resonanzsystems hinterlegt ist und in kurzen Zeitabschnitten die Messwerte mit dem Modell verglichen werden, um mittels eines Optimierverfahrens die aktuelle Position des Schwingers (20) zu ermitteln.

12. Verfahren zur Positionsbestimmung nach Anspruch 11, bei dem die Spannungs- und Stromwerte und ihre zeitliche Ableitung und Integral bei verschiedenen Ansteuerfrequenzen mit einer Lookup-Table verglichen und die entsprechende Position interpoliert wird.

13. Verwendung des Resonanzsystems nach Anspruch 9 oder 10 in einem Raumfahrzeug.

## Claims

1. Force generator (10) for an active resonance system, comprising a housing (14), to which a moving coil (18) is fastened, also comprising an oscillator (20) with at least one permanent magnet (28), which has an annular slot (34) for the moving coil (18), wherein the oscillator (20) is suspended in the housing (14) with a degree of freedom of movement such that an oscillating movement takes place in the axial direction of the annular slot (34), wherein the housing (14) is formed rotationally symmetrically with respect to the axial direction, also arranged in the housing (14) is an armature (16), which magnetically attracts the oscillator (20) when it approaches, and wherein the oscillator (20) comprises a cup (24) to which the permanent magnet (28) is centrally attached, **characterized in that**, for detecting the distance between the oscillator (20) and the armature (16), the force generator (10) comprises a position determining device (35) and **in that** the oscillator (20) is suspended by means of flexible mounts (22a, 22b), against the force of which it can be moved by the attraction of the armature (16) into a locked position against the latter.

2. Force generator (10) according to Claim 1 or 2, **characterized in that** magnetizable ring segments are attached to the inside of the cup (24) and the permanent magnet (28) to form the annular slot (34) .

3. Force generator (10) according to one of the preceding claims, **characterized in that** the oscillator (20) is attached to the housing (14) at two axially spaced-apart points by means of identical flexible mounts (22a, 22b).

4. Force generator (10) according to Claim 1, **characterized in that** the flexible mounts (22a, 22b) are formed as springs, in particular as annular discs of heat-conducting material with a high fatigue strength.

5. Force generator (10) according to Claim 4, **characterized in that** arranged between the housing (14) and the oscillator (20) are two axially spaced-apart groups of at least three springs each, which are distributed around the axial circumference.

6. Force generator (10) according to one of the preceding claims, **characterized in that** the moving coil (18) is fastened to the housing (14) by way of a spacer ring (19) of a non-ferromagnetic and heat-conducting material.

7. Force generator (10) according to Claim 6, **characterized in that** the spacer ring (19) consists of beryllium copper.

8. Force generator (10) according to one of the preceding claims, **characterized in that** the position determining device is formed by a distance sensor (35).

9. Resonance system comprising a force generator (10) according to one of the preceding claims and a monitoring device for the electrical connection of the moving coil (18).

10. Resonance system according to Claim 9, in which activation of the moving coil (18) has the effect of generating a force of attraction, acting on the oscillator (20), whereby the latter is drawn up to the armature (16), until an electromagnetic force of attraction acting between the oscillator (20) and the armature (16) draws them into contact and keeps them in contact, whereby the resonance system is lockable or locked.

11. Method for determining a position of an oscillator (20) of a resonance system according to either of Claims 9 and 10 by means of voltage and current measurement, **characterized in that** the physical model of the resonance system is stored in a microcontroller and the measured values are compared with the model at short time intervals, in order by means of an optimizing process to ascertain the current position of the oscillator (20) .

12. Method for determining a position according to Claim 11, in which the voltage and current values and their time derivative and integral at various activating frequencies are compared with a lookup table and the corresponding position is interpolated.

13. Use of the resonance system according to Claim 9 or 10 in a spacecraft.

## Revendications

1. Générateur de force (10) pour un système résonant actif, comprenant un boîtier (14) auquel est fixée une bobine mobile (18), comprenant en outre un oscillateur (20) pourvu d'au moins un aimant permanent (28) qui possède une fente annulaire (34) pour la bobine mobile (18), l'oscillateur (20) étant suspendu dans le boîtier (14) avec un degré de liberté de mouvement de telle sorte qu'un mouvement oscillant dans la direction axiale de la fente annulaire (34) a lieu, le boîtier (14) étant configuré à symétrie de rotation par rapport à la direction axiale, un induit (16) étant en outre disposé dans le boîtier (14), lequel attire magnétiquement l'oscillateur (20) lorsque celui-ci s'approche, et l'oscillateur (20) possédant un pot (24) au niveau duquel l'aimant permanent (28) est monté de manière centrée, **caractérisé en ce que** le générateur de force (10) comporte un dispositif de détermination de position (35) destiné à détecter l'écart entre l'oscillateur (20) et l'induit (16) et **en ce que** l'oscillateur (20) est suspendu au moyen d'attaches élastiques (22a, 22b) contre la force desquelles il peut être déplacé dans une position verrouillée par l'attraction de l'induit (16) s'opposant à celles-ci.

2. Générateur de force (10) selon la revendication 1 ou 2, **caractérisé en ce que** des portions annulaires magnétisables destinées à former la fente annulaire (34) sont montées du côté intérieur sur le pot (24) et sur l'aimant permanent (28).

3. Générateur de force (10) selon l'une des revendications précédentes, **caractérisé en ce que** l'oscillateur (20) est monté sur le boîtier (14) au niveau de deux endroits espacés dans le sens axial au moyen d'attaches élastiques (22a, 22b) du même type.

4. Générateur de force (10) selon la revendication 1, **caractérisé en ce que** les attaches élastiques (22a, 22b) sont réalisées sous la forme de ressorts, notamment sous la forme de rondelles annulaires en matériau thermoconducteur ayant une résistance limite d'endurance élevée.

5. Générateur de force (10) selon la revendication 4, **caractérisé en ce qu'**entre le boîtier (14) et l'oscillateur (20) sont disposés deux groupes espacés dans le sens axial, chacun composé d'au moins trois ressorts distribués sur le pourtour axial.

6. Générateur de force (10) selon l'une des revendications précédentes, **caractérisé en ce que** la bobine mobile (18) est fixée au boîtier (14) par le biais d'une bague d'espacement (19) en un matériau non ferromagnétique et thermoconducteur.

7. Générateur de force (10) selon la revendication 6, **caractérisé en ce que** la bague d'espacement (19) se compose de cuprobéryllium.

8. Générateur de force (10) selon l'une des revendications précédentes, **caractérisé en ce que** le dispositif de détermination de position est formé par un capteur d'écart (35).

9. Système résonant comprenant un générateur de force (10) selon l'une des revendications précédentes ainsi qu'un dispositif de commande pour le raccordement électrique de la bobine mobile (18).

10. Système résonant selon la revendication 9, avec lequel une force d'attraction agissant sur l'oscillateur (20) est générée par excitation de la bobine mobile (18), ce qui a pour effet que celui-ci est attiré contre l'induit (16) jusqu'à ce qu'une force d'attraction électromagnétique qui agit entre l'oscillateur (20) et l'induit (16) tire et maintient ceux-ci en contact, ce par quoi le système résonant peut être verrouillé ou est verrouillé.

11. Procédé de détermination de la position d'un oscillateur (20) d'un système résonant selon l'une des revendications 9 ou 10 au moyen d'une mesure de la tension et du courant, **caractérisé en ce que** le modèle physique du système résonant est stocké dans un microcontrôleur et les valeurs mesurées sont comparées avec le modèle à de courts intervalles de temps afin de déterminer la position actuelle de l'oscillateur (20) au moyen d'un procédé d'optimisation.

12. Procédé de détermination de la position selon la revendication 11, avec lequel les valeurs de la tension et du courant ainsi que leur dérivée dans le temps et leur intégrale à différentes fréquences d'excitation sont comparées avec une table de conversion et la position correspondante est interpolée.

13. Utilisation du système résonant selon la revendication 9 ou 10 dans un véhicule spatial.
